(19) Europäisches Patentamt
European Patent Office
Office européen des brevets

(11) **EP 2 984 357 B1**

(12) **EUROPÄISCHE PATENTSCHRIFT**

(45) Veröffentlichungstag und Bekanntmachung des Hinweises auf die Patenterteilung:
**21.08.2019  Patentblatt 2019/34**

(21) Anmeldenummer: **14716596.3**

(22) Anmeldetag: **11.04.2014**

(51) Int Cl.:
**F16C 33/51** *(2006.01)*     **F16C 19/36** *(2006.01)*

(86) Internationale Anmeldenummer:
**PCT/EP2014/057409**

(87) Internationale Veröffentlichungsnummer:
**WO 2014/167107 (16.10.2014 Gazette 2014/42)**

(54) **WÄLZLAGER MIT IN MEHREREN KÄFIGSEGMENTEN ANGEORDNETEN WÄLZKÖRPERN**

ROLLING BEARING WITH ROLLING ELEMENTS PROVIDED IN A PLURALITY OF CAGE SEGMENTS

ROULEMENT AVEC DES ÉLÉMENTS ROULANTS POURVUS DANS UNE PLURALITÉ DE SEGMENTS DE CAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2013  DE 102013206347**

(43) Veröffentlichungstag der Anmeldung:
**17.02.2016  Patentblatt 2016/07**

(73) Patentinhaber: **Aktiebolaget SKF**
**415 50 Göteborg (SE)**

(72) Erfinder:
• **LIANG, Baozhu**
**97456 Hambach (DE)**

• **TANKE, Jesko-Henning**
**97422 Schweinfurt (DE)**

(74) Vertreter: **Kuhstrebe, Jochen**
**SKF GmbH**
**Gunnar-Wester-Straße 12**
**97421 Schweinfurt (DE)**

(56) Entgegenhaltungen:
WO-A1-2010/066293     WO-A2-2012/076583
DE-A1- 10 246 825     DE-A1-102007 048 655
DE-A1-102008 062 913     DE-U1-202006 016 321
JP-A- 2007 303 608     US-A1- 2009 074 345

**Beschreibung**

Die Erfindung betrifft ein Wälzlager mit mindestens einem Innenring und mindestens einem Außenring, wobei zwischen den Lagerringen eine Anzahl Wälzkörper mit einem Durchmesser angeordnet sind, wobei die Wälzkörper durch einen Käfig gehalten werden, wobei der Käfig aus einer Anzahl Käfigsegmenten besteht, wobei jedes Käfigsegment aus einer rahmenförmigen Struktur besteht, bei der mehrere seitliche Begrenzungswände eine Aufnahmetasche für einen Wälzkörper bilden, wobei die Aufnahmetasche so dimensioniert ist, dass im lastfreien Zustand des Wälzlagers am Teilkreis des Wälzlagers zwischen den dem Wälzkörper zugewandten Seitenflächen der Aufnahmetasche und dem von der Aufnahmetasche aufgenommenen Wälzkörper ein Spiel in Umfangsrichtung des Wälzlagers vorliegt, wobei ein Käfigsegment mit seiner Aufnahmetasche einen Wälzkörper aufnimmt und ein sich an diesen Wälzkörper in Umfangsrichtung anschließender Wälzkörper von einem Käfigsegment freigehalten ist, so dass sich in einer Aufnahmetasche befindliche Wälzkörper und sich nicht in einer Aufnahmetasche befindliche Wälzkörper in Umfangsrichtung abwechselnd angeordnet sind, wobei das Käfigsegment zwei Anlaufflächen für jeweils einen in Umfangsrichtung angrenzenden Wälzkörper aufweist.

Ein gattungsgemäßes Wälzlager ist aus der WO 2012/076583 A2 bekannt. Statt eines klassischen einstückigen Lagerkäfigs wird hier der Käfig durch eine Anzahl Käfigsegmente gebildet. Dies hat den Vorteil, dass eine besonders gute Eignung für große Kegelrollenlager besteht und die hier auftretenden Belastungen besonders gut aufgenommen werden können. Des weiteren können die einzelnen Käfigsegmente gut montiert werden; gleichzeitig kann ein geringes Käfiggewicht erreicht werden. Die Ausbildung der Käfigsegmente ermöglicht eine sichere Aufnahme des Wälzkörpers und eine zuverlässige Führung des Käfigsegments am Wälzkörper. Die Käfigsegmente kommen dabei bei bestimmungsgemäßer Benutzung nicht in Berührung; sie sind nicht miteinander verbunden.

Weitere ähnliche und auch andere Lösungen offenbaren die US2012/0082409A1, die DE 10 2006 022 951A1, die DE11 2009 002 624T5, die DE20 2008 017 091U1, die DE 102 46 825A1, die DE3114 325A1, die JP2012 026 534A, die JP2007 303 608A, die DE20 2006 016 321U, die WO2010/066293A1, die DE10 2007 048655 A1, die US 2009/074345A1und die DE10 2008 062 913A1.

Dabei haben sich die genannten segmentierten Käfige insbesondere bei Großlagern bewährt. Zwischen den Käfigsegmenten und den benachbarten Wälzkörpern treten im Betrieb Kräfte auf. Dies sind in Abhängigkeit des Betriebszustands des Wälzlagers sowohl dynamische als auch statische Kräfte.

Die Käfigsegmente sollen möglichst dünnwandig sein, um möglichst viele Wälzkörper verwenden zu können, was aber dadurch eingeschränkt ist, dass die Käfige durch die erwähnten Kräfte nicht beschädigt werden dürften.

Der Erfindung liegt die **Aufgabe** zugrunde, ein gattungsgemäßes Lager so fortzubilden, dass der genannte Nachteil eliminiert werden kann. Demgemäß sollen die Käfigsegmente so gestaltet werden, dass sie einerseits in Umfangsrichtung klein gehalten werden können, um möglichst viele Wälzkörper im Lager unterbringen zu können. Dann sollen sie aber auch so gestaltet werden, dass auch in einem Betriebszustand unter hoher Last keine negativen Auswirkungen auf das Laufverhalten des Lagers auftreten. Dadurch soll sich insgesamt ein verbessertes Laufverhalten des Wälzlagers ergeben.

Die **Lösung** dieser Aufgabe durch die Erfindung ist dadurch gekennzeichnet, dass das Spiel in jedem Axialschnitt des Wälzlagers der Beziehung genügt:

$$c_{max} \geq c \geq c_{min}$$

mit:

$$c_{min} = 0{,}01 * D_w - 0{,}5 \text{ mm}$$

und

$$c_{max} = 0{,}02 * D_w - 0{,}4 \text{ mm,}$$

wobei der Durchmesser des Wälzkörpers mindestens 50 mm beträgt, wobei bei gleichmäßiger Verteilung des Spiels im Wälzlager am Teilkreis des Wälzlagers zwischen der Anlauffläche des Käfigsegments und dem in Umfangsrichtung an das Käfigsegment angrenzenden Wälzkörper ein Gesamtspiel (also summiert über den gesamten Umfang) in Umfangsrichtung des Wälzlagers vorliegt und wobei zwischen dem Spiel zwischen den Seitenflächen der Aufnahmetasche und dem in der Aufnahmetasche aufgenommenen Wälzkörper und dem Gesamtspiel zwischen der Anlauffläche des Käfigsegments und dem in Umfangsrichtung an das Käfigsegment angrenzenden Wälzkörper die Beziehung besteht:

$$c < 0{,}2 \text{ x.}$$

Das Spiel (in mm) ergibt sich damit im definierten Bereich unter Zugrundelegung des Durchmessers des Wälzkörpers $D_w$ (in mm) im jeweiligen Axialschnitt, sofern der Durchmesser nicht über die axiale Erstreckung des Wälzkörpers ohnehin konstant ist (wie im Falle eines Zylinderrollenlagers). Der Durchmesser des Wälzkörpers $D_w$ wird mit den genannten Faktoren (0,01 bzw. 0,02) multipliziert und der jeweils genannte Betrag (0,5 mm bzw. 0,4 mm) abgezogen, um das minimale und das maximale Spiel c zu erhalten.

Die Käfigsegmente können wälzkörpergeführt, laufbahngeführt oder bordgeführt bzw. schultergeführt sein.

Die Käfigsegmente sind bevorzugt als einstückige Kunststoffformteile ausgebildet.

Der Erfindungsvorschlag kommt bevorzugt bei einem Kegelrollenlager oder bei einem Zylinderrollenlager zum Einsatz.

Das erfindungsgemäße Konzept führt zu einer Luft in der Käfigtasche, die so eingestellt ist, dass bei der Belastung des Käfigs im nominellen Betriebszustand der Wälzkörper diese im Inneren des Käfigs frei laufen können, ohne durch den umgebenden Käfig eingeklemmt zu werden. Bei den selten auftretenden Betriebszuständen mit deutlich höheren Belastungen dagegen drücken diese Belastungen den Käfig soweit zusammen, dass der Wälzkörper seine Stützwirkung entfaltet und den Käfig vor Beschädigungen schützt. Das Einklemmen des Wälzkörpers unter diesen Bedingungen hat aufgrund der Seltenheit dieser Ereignisse und ihrer kurzen Dauer keinen negativen Effekt auf das weitere Betriebsverhalten des Lagers. Somit wird bei geringeren Gesamtabmessungen eine höhere Sicherheit gegen extreme Betriebszustände erzielt.

Der Wälzkörper hat innerhalb der Tasche des Käfigsegmentes eine definierte Luft (c) in Umfangsrichtung des Lagers. Die Luft ist dabei so gewählt und eingestellt, dass beim Überschreiten einer bestimmten Last auf das Käfigsegment Kontakt zwischen dem in der Aufnahmetasche liegenden Wälzkörper und dem Käfigsegment auftritt, der zu einer zusätzlichen Stützwirkung führt und die Kraftaufnahmefähigkeit des Käfigs verbessert.

Wenn ein größerer Bereich des Lagerumfanges unbelastet ist, werden die Käfigsegmente im jeweils unteren Teil der unbelasteten Zone durch die summierte Masse der darüber liegenden Wälzkörper belastet. Die Luft (c) ist ausreichend groß dimensioniert, so dass es unter diesen Belastungen nicht zu einem Verklemmen des Wälzkörpers innerhalb der Aufnahmetasche kommt.

Im normalen Betrieb des Wälzlagers ist die Luft (c) ausreichend dimensioniert, so dass es nicht durch dynamische Vorgänge zu einer so großen Verformung kommt, die zu einem Verklemmen des Wälzkörpers innerhalb der Aufnahmetasche führen würde. Da die Kraft, bis zu der der Wälzkörper noch Luft in der Aufnahmetasche hat, kontrolliert eingestellt werden kann, kann gewählt werden, bei welchen Belastungen Kontakt vorliegt und bei welchen noch nicht.

Die Käfigluft (c) wird indes auch gezielt so eingestellt, dass beim Überschreiten einer bestimmten Last eines benachbarten Wälzkörpers auf das Käfigsegment die resultierende Käfigverformung so groß wird, dass der Wälzkörper innerhalb der Aufnahmetasche des Käfigsegments von diesem eingeklemmt wird und der Käfig somit vom Wälzkörper gestützt wird. Dadurch erhöht sich die Belastung, die der Käfig aushalten kann.

Die vorgeschlagene maximale und minimale Käfigluft berücksichtigt das elastische Verhalten des Käfigmaterials und ergibt sich aus den oben genannten Beziehungen für geeignete Rollengrößen, d. h.:

$$c_{max} \geq c \geq c_{min}$$

mit:

$$c_{min} = 0{,}01 * D_w - 0{,}5 \text{ mm}$$

und

$$c_{max} = 0{,}02 * D_w - 0{,}4 \text{ mm}.$$

mit c (in mm) als der Luft in der Käfigtasche in Umfangsrichtung des Lagers und $D_w$ als dem Rollendurchmesser (in mm).

Die preiswerten Kunststoffkäfigsegmente können auch bei größeren Rollenmassen eingesetzt werden.

Mit dem vorgeschlagenen Konzept werden bevorzugt Großlager mit Zylinderrollen oder Kegelrollen ausgestattet, wobei bevorzugt Eintaschensegmente vorgesehen sind; auch Mehrtaschensegmentkäfige sind möglich.

In vorteilhafter Weise ergibt sich so eine Erhöhung der tragbaren Lasten auf den segmentierten Lagerkäfig durch die Stützwirkung der angrenzenden Wälzkörper.

In der Zeichnung ist ein Ausführungsbeispiel der Erfindung dargestellt. Es zeigen:

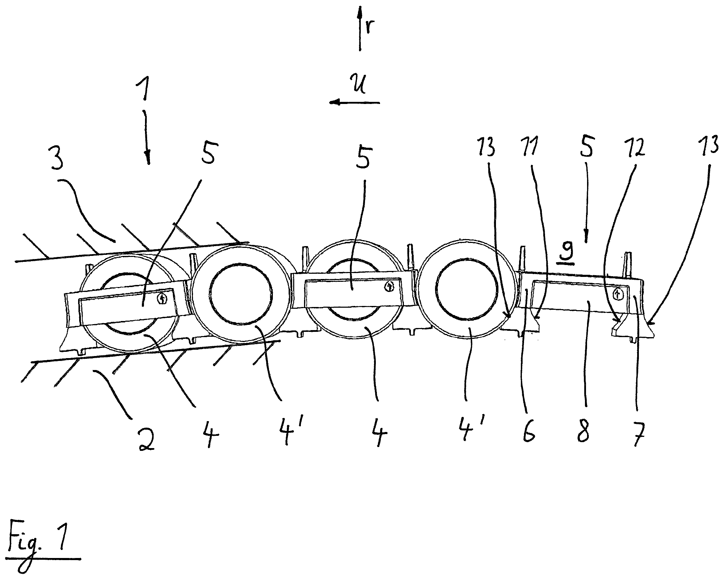

Fig. 1    einen Teil eines Kegelrollenlagers, gesehen in Achsrichtung, und

Fig. 2    einen vergrößerten Ausschnitt aus Fig. 1 in einem Axialschnitt, wobei drei benachbarte Kegelrollen zu sehen sind, wobei die mittlere von einem Käfigsegment gehalten wird.

In den Figuren ist für die Anwendung in einem Kegelrollenlager das erfindungsgemäße Konzept illustriert.

Das Wälzlager 1 in Form eines Kegelrollenlagers weist einen Innenring 2 und einen Außenring 3 auf, wobei Wälzkörper 4, 4' zwischen den Lagerringen 2, 3 angeordnet sind. Die Wälzkörper 4, 4' werden nicht von einem klassischen Käfig gehalten; vorgesehen sind vielmehr Käfigsegmente 5, die zwischen den Wälzkörpern angeordnet sind.

Jedes Käfigsegment 5 weist eine rahmenartige Struktur auf, die durch vier Begrenzungswände gebildet wird; in den Figuren sind die Begrenzungswände 6, 7 und 8 zu sehen, d. h. drei der insgesamt vier Wände, die eine Aufnahmetasche 9 für einen Wälzkörper 4 bilden.

In jedem Axialschnitt hat der kegelige Wälzkörper 4 einen Durchmesser $D_w$. Die Wälzkörper 4 liegen dabei auf einem Teilkreis 10 (Verlauf der Mittelpunkte der Wälzkörper 4).

Die Käfigtasche 9 wird durch Seitenflächen 11 und 12 begrenzt, die an den Begrenzungswänden 6 und 7 ausgebildet sind und die der Form des Wälzkörpers 4 zumindest abschnittsweise angepasst sind.

In Umfangsrichtung U wechseln sich dabei Wälzkörper 4 ab, die sich in einer Aufnahmetasche 9 des Käfigsegments 5 befinden, und Wälzkörper 4', die frei von einem Käfigsegment 5 sind. Für deren Führung ist allerdings eine Anlauffläche 13 an beiden Seiten des Käfigsegments 5 vorgesehen.

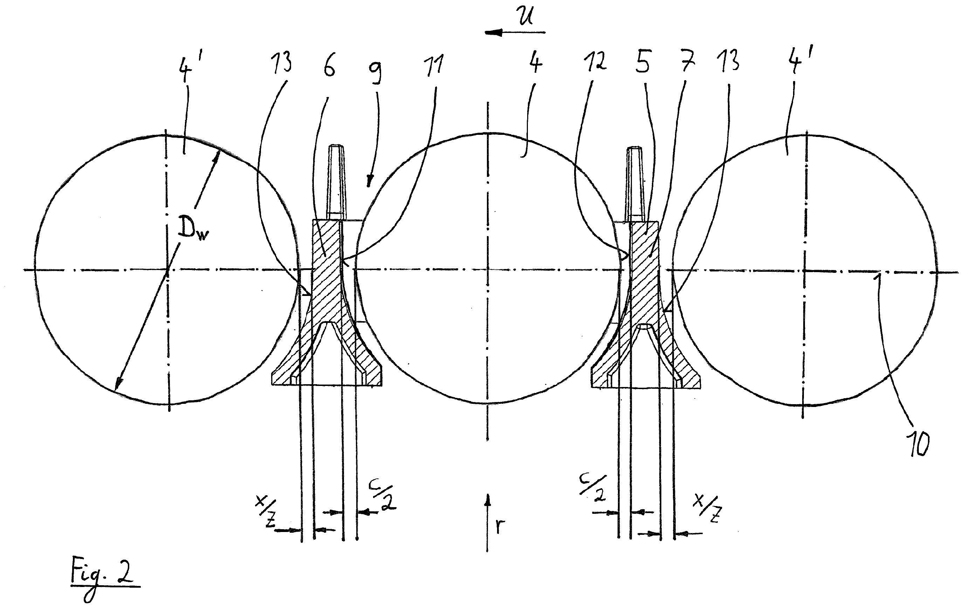

In Fig. 2 ist das Spiel c am Teilkreis 10 eingetragen, das ein Wälzkörper 4 im lastfreien Zustand des Lagers in der Aufnahmetasche 9 hat (in der symmetrischen Darstellung gemäß Fig. 2 teilt sich das Spiel c auf beide Seitenflächen 11 und 12 hälftig auf).

Ebenfalls eingetragen ist das über dem Umfang U gleichmäßig verteilt angenommene Spiel x/z (mit z als der Anzahl der Wälzkörper) am Teilkreis 10, das in Umfangsrichtung U zwischen dem Wälzkörper 4' und der Anlauffläche 13 vorliegt. Das Spiel x stellt also das über den Umfang aufsummierte Gesamtspiel der Wälzkörperreihe dar.

Für die Größe des Spiels c in einer Aufnahmetasche 9 und das Verhältnis dieses Spiels c zum Gesamtspiel x gelten die oben angegebenen Beziehungen.

**Bezugszeichenliste**

| 1 | Wälzlager |
|----|----|
| 2 | Innenring |
| 3 | Außenring |
| 4 | Wälzkörper |
| 4' | Wälzkörper |
| 5 | Käfigsegment |
| 6 | Begrenzungswand |
| 7 | Begrenzungswand |
| 8 | Begrenzungswand |
| 9 | Aufnahmetasche |
| 10 | Teilkreis |
| 11 | Seitenfläche |
| 12 | Seitenfläche |
| 13 | Anlauffläche |

| $D_w$ | Durchmesser des Wälzkörpers |
|----|----|
| c | Spiel |
| x | (Gesamt)Spiel |
| z | Anzahl der Wälzkörper |
| K | Konstante |
| U | Umfangsrichtung |
| r | radiale Richtung |

**Patentansprüche**

**1.** Wälzlager (1) mit mindestens einem Innenring (2) und mindestens einem Außenring (3), wobei zwischen den Lagerringen (2, 3) eine Anzahl Wälzkörper (4) mit einem Durchmesser ($D_w$) angeordnet sind, wobei die Wälzkörper (4) durch einen Käfig gehalten werden, wobei der Käfig aus einer Anzahl Käfigsegmenten (5) besteht, wobei jedes Käfigsegment (5) aus einer rahmenförmigen Struktur besteht, bei der mehrere seitliche Begrenzungswände (6, 7, 8) eine Aufnahmetasche (9) für einen Wälzkörper (4) bilden, wobei die Aufnahmetasche (9) so dimensioniert ist, dass im lastfreien Zustand des Wälzlagers (1) am Teilkreis (10) des Wälzlagers (1) zwischen den dem Wälzkörper (4) zugewandten Seitenflächen (11, 12) der Aufnahmetasche (9) und dem von der Aufnahmetasche (9) aufgenommenen Wälzkörper (4) ein Spiel (c) in Umfangsrichtung (U) des Wälzlagers (1) vorliegt, wobei ein Käfigsegment (5) mit seiner Aufnahmetasche (9) einen Wälzkörper (4) aufnimmt und ein sich an diesen Wälzkörper (4) in Umfangsrichtung (U) anschließender Wälzkörper (4') von einem Käfigsegment (5) freigehalten ist, so dass sich in einer Aufnahmetasche (9) befindliche Wälzkörper (4) und sich nicht in einer Aufnahmetasche (9) befindliche Wälzkörper (4') in Umfangsrichtung (U) abwechselnd angeordnet sind, wobei das Käfigsegment (5) zwei Anlaufflächen (13) für jeweils einen in Umfangsrichtung (U) angrenzenden Wälzkörper (4') aufweist,

**dadurch gekennzeichnet, dass**

das Spiel (c) in jedem Axialschnitt des Wälzlagers (1) der Beziehung genügt:

$$c_{max} \geq c \geq c_{min}$$

mit:

$$c_{min} = 0{,}01 * D_w - 0{,}5 \text{ mm}$$

und

$$c_{max} = 0{,}02 * D_w - 0{,}4 \text{ mm},$$

wobei der Durchmesser ($D_W$) des Wälzkörpers (4) mindestens 50 mm beträgt, wobei bei gleichmäßiger Verteilung des Spiels im Wälzlager (1) am Teilkreis (10) des Wälzlagers (1) zwischen der Anlauffläche (13) des Käfigsegments (5) und dem in Umfangsrichtung (U) an das Käfigsegment (5) angrenzenden Wälzkörper (4') ein Gesamtspiel (x) in Umfangsrichtung (U) des Wälzlagers (1) vorliegt und wobei zwischen dem Spiel (c) zwischen den Seitenflächen (11, 12) der Aufnahmetasche (9) und dem in der Aufnahmetasche (9) aufgenommenen Wälzkörper (4) und dem Gesamtspiel (x) zwischen der Anlauffläche (13) des Käfigsegments (5) und dem in Umfangsrichtung (U) an das Käfigsegment (5) angrenzenden Wälzkörper (4') die Beziehung besteht:

$$c < 0{,}2 \ x.$$

2. Wälzlager nach Anspruch 1, **dadurch gekennzeichnet, dass** die Käfigsegmente (5) wälzkörpergeführt sind.

3. Wälzlager nach Anspruch 1, **dadurch gekennzeichnet, dass** die Käfigsegmente (5) laufbahngeführt sind.

4. Wälzlager nach Anspruch 1, **dadurch gekennzeichnet, dass** die Käfigsegmente (5) bordgeführt bzw. schultergeführt sind.

5. Wälzlager nach einem der Ansprüche 1 bis 4, **dadurch gekennzeichnet, dass** die Käfigsegmente (5) als einstückige Kunststoffformteile ausgebildet sind.

6. Wälzlager nach einem der Ansprüche 1 bis 5, **dadurch gekennzeichnet, dass** es ein Zylinderrollenlager ist.

7. Wälzlager nach einem der Ansprüche 1 bis 5, **dadurch gekennzeichnet, dass** es ein Kegelrollenlager ist.

**Claims**

1. Anti-friction bearing (1) having at least one inner ring (2) and at least one outer ring (3), a number of rolling bodies (4) with a diameter ($D_W$) being arranged between the bearing rings (2, 3), the rolling bodies (4) being held by way of a cage, the cage consisting of a number of cage segments (5), each cage segment (5) consisting of a frame-shaped structure, in the case of which a plurality of lateral boundary walls (6, 7, 8) form a receiving pocket (9) for a rolling body (4), the receiving pocket (9) being dimensioned in such a way that, in the load-free state of the anti-friction bearing (1), there is a play (c) in the circumferential direction (U) of the anti-friction bearing (1) on the pitch circle (10) of the anti-friction bearing (1) between those side faces (11, 12) of the receiving pocket (9) which face the rolling body (4) and the rolling body (4) which is received by the receiving pocket (9), a cage segment (5) receiving a rolling body (4) by way of its receiving pocket (9), and a rolling body (4') which adjoins the said rolling body (4) in the circumferential direction (U) being kept free from a cage segment (5), with the result that rolling bodies (4) which are situated in a receiving pocket (9) and rolling bodies (4') which are not situated in a receiving pocket (9) are arranged so as to alternate in the circumferential direction (U), the cage segment (5) having two run-on faces (13) for in each case one rolling body (4') which is adjacent in the circumferential direction (U),
**characterized in that**
the play (c) in each axial section of the anti-friction bearing (1) complies with the relationship:

$$c_{max} \ \geq \ c \ \geq \ c_{min}$$

where:

$$c_{min} \ = \ 0.01 \ * \ D_W \ - \ 0.5 \ mm,$$

and

$$c_{max} \ = \ 0.02 \ * \ D_W \ - \ 0.4 \ mm,$$

the diameter ($D_w$) of the rolling body (4) being at least 50mm,
there being an overall play (x) in the circumferential direction (U) of the anti-friction bearing (1) between the run-on face (13) of the cage segment (5) and the rolling body (4') which adjoins the cage segment (5) in the circumferential direction (U) in the case of a homogeneous distribution of the play in the anti-friction bearing (1) on the pitch circle (10) of the anti-friction bearing (1), and the following relationship existing between the play (c) between the side faces (11, 12) of the receiving pocket (9) and the rolling body (4) which is received in the receiving pocket (9) and the overall play (x) between the run-on face (13) of the cage segment (5) and the rolling body (4') which adjoins the cage segment (5) in the circumferential direction (U):

$$c \ < \ 0.2 \ x.$$

2. Anti-friction bearing according to Claim 1, **characterized in that** the cage segments (5) are guided by rolling body.

3. Anti-friction bearing according to Claim 1, **characterized in that** the cage segments (5) are guided by raceway.

4. Anti-friction bearing according to Claim 1, **characterized in that** the cage segments (5) are guided by rim or guided by shoulder.

5. Anti-friction bearing according to one of Claims 1 to 4, **characterized in that** the cage segments (5) are configured as single-piece moulded plastic parts.

6. Anti-friction bearing according to one of Claims 1 to 5, **characterized in that** it is a cylindrical roller bearing.

7. Anti-friction bearing according to one of Claims 1 to 5, **characterized in that** it is a tapered roller bearing.

**Revendications**

1. Palier de roulement (1) comportant au moins une bague intérieure (2) et au moins une bague extérieure (3), un certain nombre d'éléments roulants (4) de diamètre ($D_w$) étant disposés entre les bagues de roulement (2, 3), les éléments roulants (4) étant maintenus par une cage, la cage étant formée d'un certain nombre de segments de cage (5), chaque segment de cage (5) étant formé d'une structure en forme de cadre dans laquelle une pluralité de parois de délimitation latérales (6, 7, 8) forment une poche de réception (9) d'un élément roulant (4), la poche de réception (9) étant dimensionnée de façon à ménager, lorsque l'élément roulant (1) n'est pas chargé, un jeu (c) dans la direction circonférentielle (U) du palier roulement (1) sur le cercle primitif (10) du palier de roulement (1) entre les surfaces latérales (11, 12), dirigées vers les éléments roulants (4), de la poche de réception (9) et l'élément roulant (4) reçu dans la poche de réception (9), un segment de cage (5) pourvu de sa poche de réception (9) comportant un élément roulant (4) et un élément roulant (4'), adjacent à cet élément roulant (4) dans la direction circonférentielle (U), étant maintenu libre d'un segment de cage (5) de manière à disposer des éléments roulants (4), qui se trouvent dans une poche de réception (9), et des éléments roulants (4'), qui ne se trouvent pas dans une poche de réception (9), alternativement dans la direction circonférentielle (U), le segment de cage (5) comportant deux surfaces de contact (13) destinées chacune à un élément roulant (4') adjacent dans la direction circonférentielle (U), **caractérisé en ce que** le jeu (c) dans chaque section axiale du palier de roulement (1) vérifie la relation :

$$c_{max} \geq c \geq c_{min}$$

avec :

$$c_{min} = 0,01 * D_w - 0,5 \text{ mm}$$

et

$$c_{max} = 0,02 * D_w - 0,4 \text{ mm},$$

le diamètre ($D_w$) de l'élément roulant (4) étant d'au moins 50 mm,
un jeu total (x) étant ménagé dans la direction circonférentielle (U) du palier de roulement (1) sur le cercle primitif (10) du palier de roulement (1) entre la surface de contact (13) du segment de cage (5) et des éléments roulants (4') adjacents dans la direction circonférentielle (U) du segment de cage (5) avec une répartition uniforme du jeu dans le palier de roulement (1) et la relation entre le jeu (c), ménagé entre les surfaces latérales (11, 12) de la poche de réception (9) et l'élément roulant (4) reçu dans la poche de réception (9), et le jeu total (x), ménagé entre la surface de contact (13) du segment de cage (5) et l'élément roulant (4') adjacent au segment de cage (5) dans la direction circonférentielle (U), étant :

$$c < 0,2 \text{ x.}$$

2. Palier de roulement selon la revendication 1, **caractérisé en ce que** les segments de cage (5) sont guidés par des éléments roulants.

3. Palier de roulement selon la revendication 1, **caractérisé en ce que** les segments de cage (5) sont guidés par des pistes de roulement.

4. Palier à roulement selon la revendication 1, **caractérisé en ce que** les segments de cage (5) sont guidés par un bord ou par un épaulement.

5. Palier de roulement selon l'une des revendications 1 à 4, **caractérisé en ce que** les segments de cage (5) sont réalisés sous la forme de pièces moulées en matière plastique.

6. Palier de roulement selon l'une des revendications 1 à 5, **caractérisé en ce qu'**il s'agit d'un palier de roulement à rouleaux cylindriques.

7. Palier de roulement selon l'une des revendications 1 à 5, **caractérisé en ce qu'**il s'agit d'un palier de roulement à rouleaux coniques.

Fig. 1

EP 2 984 357 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012076583 A2
- US 20120082409 A1
- DE 102006022951 A1
- DE 112009002624 T5
- DE 202008017091 U1
- DE 10246825 A1
- DE 3114325 A1
- JP 2012026534 A
- JP 2007303608 A
- DE 202006016321 U
- WO 2010066293 A1
- DE 102007048655 A1
- US 2009074345 A1
- DE 102008062913 A1